# EUROPÄISCHE PATENTSCHRIFT

(11) **EP 0 605 676 B1**
(45) Veröffentlichungstag und Bekanntmachung des Hinweises auf die Patenterteilung: **19.03.1997**
(21) Anmeldenummer: 93912526.6
(22) Anmeldetag: 17.06.1993
(51) Int. Cl.: B60S 3/04, B08B 3/02

(54) **SELBSTBEDIENUNGSEINRICHTUNG ZUR AUTOPFLEGE**
SELF-SERVICE CAR WASHING FACILITY
PORTE DE LAVAGE-NETTOYAGE DE VOITURES EN LIBRE SERVICE

(30) Priorität: 17.06.1992 CH 1902/92
(43) Veröffentlichungstag der Anmeldung: 13.07.1994
(73) Patentinhaber: MALTSIS, Panos, CH-2502 Biel (CH)
(72) Erfinder: MALTSIS, Panos, CH-2502 Biel (CH)
(74) Vertreter: Szilagyi, Marianne
(86) Internationale Anmeldenummer: CH9300156
(87) Internationale Veröffentlichungsnummer: WO9325416

(56) Entgegenhaltungen:
- DE-A- 1 580 456
- DE-U- 9 004 783
- FR-A- 2 168 840
- FR-A- 2 642 997
- GB-A- 2 137 149
- GB-A- 2 202 503
- GB-A- 2 236 728

## Beschreibung

Die Erfindung betrifft eine Selbstbedienungsabgabeeinrichtung zur Abgabe von Mitteln, wobei die Mittel an Kraftfahrzeugen verwendbar sind.

In der DE 90 04 783 U1 wird eine Vorrichtung zum Vorsprühreinigen von Kraftfahrzeugen gezeigt, die anschliessend eine Waschanlage durchlaufen. Fest haftende Verschmutzungen sollen vor der Hauptwäsche mit einem Spezialreiniger behandelt werden, damit diese während des Waschvorganges vollständig entfernt werden. Eine Waschanlage dient zum Zweck der Reinigung der Aussenflächen eines Kraftfahrzeuges. Die hier vorgestellte Vorrichtung unterstützt diesen Waschvorgang dahingehend, dass starke Verunreinigungen ebenfalls entfernt werden können. Die Vorrichtung ist nur in Verbindung mit einer Waschanlage sinnvoll, sie stellt lediglich einen Zusatz zur Waschanlage dar.

Auch die in der DE 15 80 456 OS beschriebene Vorrichtung bezieht sich auf die Reinigung der Aussenflächen , also auf die Karosserie eines Kraftfahrzeuges.

Die beschriebenen Anlagen beziehen sich im wesentlichen auf Anlagen zur Autowäsche an den Autoaussenflächen, beispielsweise der Karosserie, dem Kühlergrill und den Felgen.

Zur weiteren Pflege eines Kraftfahrzeuges sind auf dem Markt eine Reihe von Pflegemittel, Reinigungsmittel, Wartungsmittel und Instandhaltungsmittel erhältlich. Diese werden vom Verbraucher üblicherweise in Behältnissen beschafft. Für den Gebrauch z.B. von destilliertem Wasser zum Nachfüllen der Flüssigkeit einer Autobatterie wird aber nur ein Bruchteil von diesem benötigt. Den Rest muss der Konsument artgerecht bis zum nächsten Gebrauch lagern. Von obengenannten Mittel werden sehr viele benötigt. Durch diese Vielzahl der Mittel ist der Kraftfahrzeughalter gezwungen, diese einzeln in Behältnissen zu kaufen und den Rest nach Gebrauch zu lagern. Unter Umständen können einzelne Mittel aufgrund langer Lagerzeiten verdampfen oder eintrocknen.

Aufgabe der Erfindung ist es, dem Autofahrer eine Anlage zur Verfügung zu stellen, die je nach Bedarf verschiedene Pflegemittel in der gerade benötigten Menge zur Verfügung stellt.

Diese Aufgabe wird dadurch gelöst, dass die Mittel Spezialmittel zur Pflege, Wartung, Reinigung, Versorgung und/oder Instandhaltung sind, zum Beispiel Pneu-/Gummireiniger, Felgenreiniger, Scheiben- und Glasreiniger, Scheibenwischwasser, Cockpit-Armaturenreiniger, Polster- und Sitzreiniger, Silikon für Türgummis, destilliertes Wasser, Motorversiegelung, Motorreiniger und Desodorator-Aerosol für die Kabinenluft, welche im wesentlichen im Vergleich zur Abgabe von Reinigungsmittel an Autowaschanlagen in kleinen Mengen oder in relativ grossen Zeitabständen benötigt werden und die Mittel jeweils einzeln über jeweils eine Sprühpistole abgebbar sind, wobei durch eine elektronische Steuerung die Benützungszeit oder Abgabemenge der einzelnen Mittel erfassbar und steuerbar sind.

In der Zeichnung ist ein Ausführungsbeispiel der erfindungsgemässen Einrichtung dargestellt. Es zeigen:

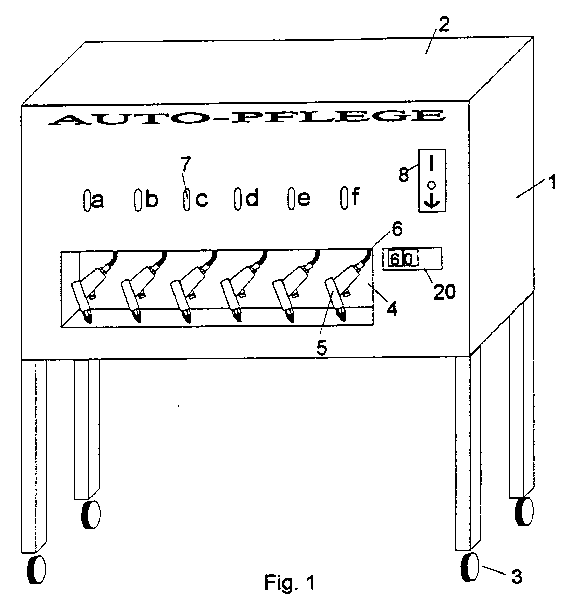

- Fig.1: die Einrichtung von der Bedienungsseite gesehen, im Schrägbild,
- Fig. 2: schematisch die Anordnung der einer Sprühpistole zugeordneten Teile, und
- Fig. 3: eine Variante zu Fig. 2

Mit 1 ist das Gehäuse bezeichnet, das einen Klappdeckel 2 aufweist und entweder auf Rollen 3 verfahrbar oder an einer Wand fest montiert ist. In einer Nische sind sechs Sprühpistolen 5 mit ihren Anschluss-Schläuchen 6 so aufgehängt, dass sie vom Benützer leicht abgehängt und zum Gebrauch herausgezogen werden können. Jede Pistole 5 ist für die Anwendung eines bestimmten Reinigungsmittels bestimmt. Mittels der Drucktasten 7a-f können nach Bedarf die Pflegefunktionen ausgewählt werden. Bei einer varianten Ausführung kann diese Auswahl zugleich mit der Auslösung der Funktion lediglich durch Druck auf den Knopf der betreffenden Sprühpistole erfolgen. Beim dargestellten Beispiel stehen folgende Funktionen zur Auswahl:
a) Pneu-/Gummi-Reiniger,
b) Scheiben- und Glasreiniger,
c) Cockpit-Armaturen-Reiniger,
d) Polster- und Sitzreiniger,
e) Motorversiegelung, und
f) Desodorator-Aerosol für die Kabinenluft.

Mit 8 ist ein üblicher Geldeinwurf mit Münzprüfer bezeichnet. Statt dessen kann auch ein Einwurf für Jetons vorgesehen sein.

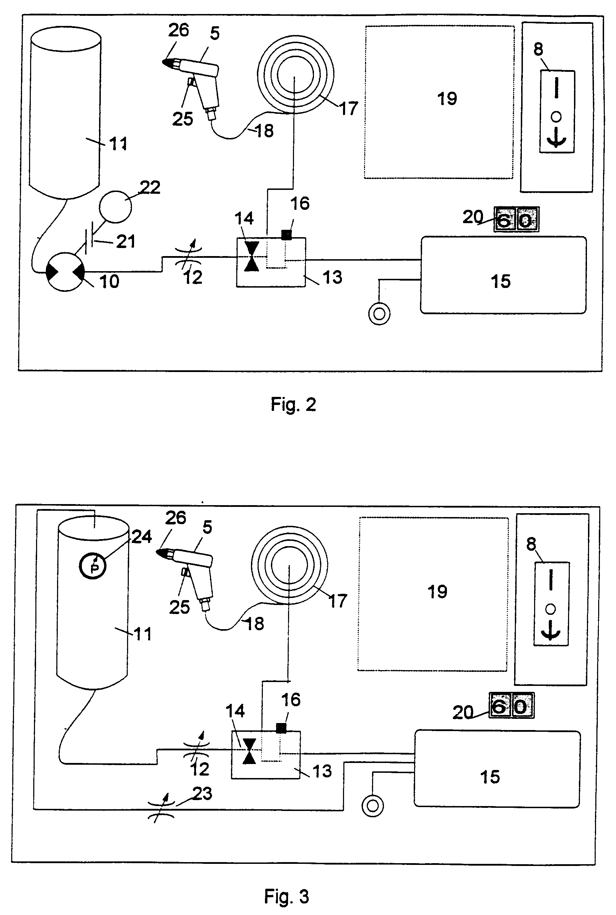

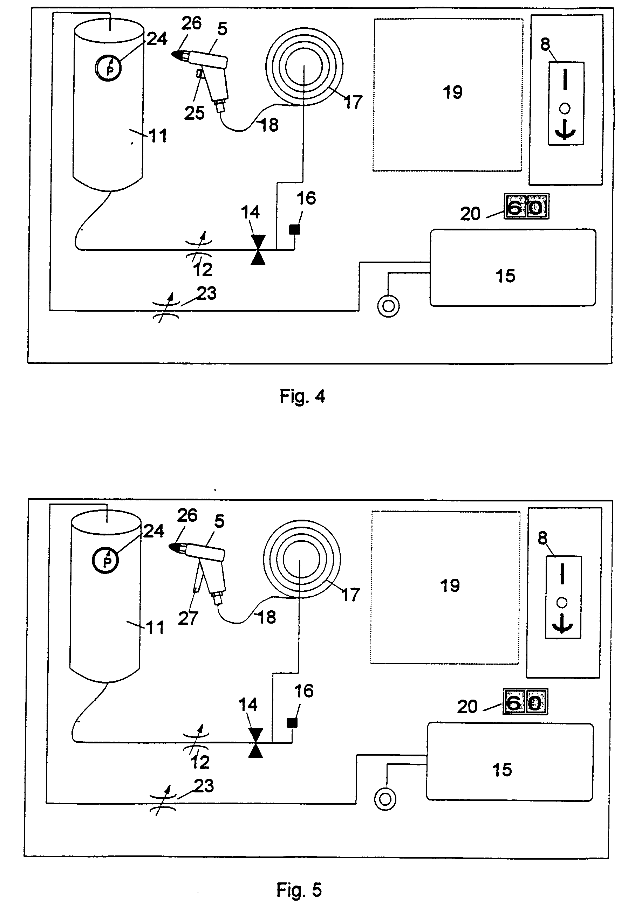

Die im Gehäuse 1 untergebrachten Elemente sind in Fig. 2 schematisch dargestellt:

Eine Pumpe 10 fördert beim Betrieb das der betreffenden Sprühpistole 5 zugeordnete Reinigungmittel aus dem Vorratsbehälter 11 über eine Drossel 12 in die Mischvorrichtung 13, wo sie ein Freigabe-Ventil 14 passiert. Auch vom Druckluftreservoir 15 wird Druckluft in die Mischvorrichtung 13 zugeführt. Aus der Mischvorrichtung 13, wird die mit den Reinigungsmittel vermischte Druckluft über die Schlauchrolle 17 der Sprühpistole 5 zugeführt. In bekannter Weise kann der Schlauch 18 durch Zug an der Sprühpistole 5 von der Rolle 17 abgewickelt werden, so dass die Sprühpistole 5 bequem an die Arbeitsstelle geführt werden kann.

In einem internen Kasten 19 sind die Stromversorgung, eine mit dem Münzeinwurf 8 verbundene Blockiervorrichtung und die nötigen Steuerelemente für alle Sprühpistolen gemeinsam untergebracht.

Bei Einwurf eines Jetons oder einer entsprechenden Geldsumme - ein Tarif für verschiedene Pflegevorgänge kann angeschrieben sein - wird die Blockierung von der Steuerung freigegeben und der Motor 22 und die gewählte Mischvorrichtung werden in Betrieb gesetzt. Dabei erkennt ein Drucksensor 16 den Pflegemittelverbrauch und startet im Steuerkasten 19 eine Zeit- oder Mengenbeschränkung der Pflegemittel. Die für einen Reinigungsvorgang zur Verfügung stehende Zeit oder Menge wird über eine graphische Anzeige 20 in Sekunden oder Mengeneinheiten rückwärts (mit abnehmendem Wert) angezeigt.

Die Steuerung kann so getroffen sein, dass entweder ein Jeton bzw. ein Geldstück für jeden Reinigungsvorgang oder eine Summe für alle gewählten Reinigungsvorgänge einzuwerfen ist.

Jede Förderpumpe 10 kann durch einen separaten Motor 22 angetrieben sein. Mit Vorteil ist jedoch nur ein gemeinsamer Motor 22 vorgesehen, an welchen die ausgewählte Förderpumpe 10 jeweils über eine Kupplung 21 angeschlossen werden kann.

In ähnlicher Weise ist es auch möglich nur ein einziges Druckreservoir 15 vorzusehen, an welches jeweils die ausgewählte Mischvorrichtung 13 angeschlossen werden kann.

Bei der Variante nach Fig. 3 wird der Förderdruck in den verschiedenen Pflegemittel-Behältern dadurch aufgebaut, dass die Behälter 11 mit dem gemeinsamen Druckreservoir 15 über ein Druckreduzierventil 23 verbunden sind, sodass in jedem Behälter 11 ein Vordruck 24 herrscht. Es kann aber auch jeder Behälter 11 über ein separates Druckreduzierventil 23 mit dem Druckreservoir 15 verbunden sein, sodass der Vordruck 24 für jeden Behälter individuell vorgegeben werden kann.

Das Druckreservoir 15 kann entweder durch Anschliessen an einen Kompressor oder an eine andere Druckquelle nachgefüllt werden.

Für jeden Pflegemittelbedarf 11 kann in der Front ein Niveauanzeiger oder ein Signallämpchen vorgesehen sein, das bei Nachfüllbedarf aufleuchtet.

Die beschriebene Einrichtung kann bei Auto-Waschanlagen, Tankstellen oder in Grossgaragen aufgestellt werden. Als Pflegemittel kommen hierbei in Frage:
- Felgenreiniger
- Motorreiniger
- Scheibenwischwasser
- Silikon für Türgummis
- Destilliertes Wasser
- Gummireiniger (Pneu)
- Glas-/Scheibenreiniger
- Kunststoff-/Armaturen-Reiniger
- Stoff-/Sitz-/Leder-Reiniger
- Motorversiegelung
- Lufterfrischer (Deo/Parfum).

## Patentansprüche

1. Selbstbedienungsabgabeeinrichtung zur Abgabe von Mitteln, wobei die Mittel an Kraftfahrzeugen verwendbar sind, dadurch gekennzeichnet, dass die Mittel Spezialmittel zur Pflege, Wartung, Reinigung, Versorgung und/oder Instandhaltung sind, zum Beispiel Pneu-/Gummireiniger, Felgenreiniger, Scheiben- und Glasreiniger, Scheibenwischwasser, Cockpit-Armaturenreiniger, Polster- und Sitzreiniger, Silikon für Türgummis, destilliertes Wasser, Motorversiegelung, Motorreiniger und Desodorator-Aerosol für die Kabinenluft, welche im wesentlichen im Vergleich zur Abgabe von Reinigungsmittel an Autowaschanlagen in kleinen Mengen oder in relativ grossen Zeitabständen benötigt werden und die Mittel jeweils einzeln über jeweils eine Sprühpistole abgebbar sind, wobei durch eine elektronische Steuerung die Benützungszeit oder Abgabemenge der einzelnen Mittel erfassbar und steuerbar sind.

2. Selbstbedienungsabgabeeinrichtung nach Anspruch 1, dadurch gekennzeichnet, dass beliebig viele Spezialmittel in beliebiger Kombination bzw. Reihen- und Zeitfolge wählbar sind.

3. Selbstbedienungsabgabeeinrichtung nach Anspruch 1, dadurch gekennzeichnet, dass die elektronische Steuerung durch einen Münzeinwurf und anschliessender Münzprüfung die Funktion der Selbstbedienungsabgabeeinrichtung zur Autopflege durch eine für eine bestimmte Menge und/oder für eine bestimmte Benützungszeit der Spezialmittel freigibt, wobei die Art des verwendeten Spezialmittels und die einzelnen Kosten des verwendeten Spezialmittels pro Mengeneinheit die Menge und Benützungszeit bestimmen.

4. Selbstbedienungsabgabeeinrichtung nach einem der Ansprüche 1 bis 3, dadurch gekennzeichnet, dass die Mengen der verbrauchten einzelnen Spezialmittel während ihrer Entnahme mittels Mengenmesseinrichtungen messbar sind und dass der restliche Abgabeumfang durch die elektronische Steuerung erfassbar ist.

5. Selbstbedienungsabgabeeinrichtung nach Anspruch 4, dadurch gekennzeichnet, dass alle Mengen der einzelnen Spezialmittel mittels einer umschaltbaren Mengenmesseinrichtung einzeln messbar sind.

6. Selbstbedienungsabgabeeinrichtung nach Anspruch 1, dadurch gekennzeichnet, dass Mischvorrichtungen vorhanden sind, in denen die Spezialmittel mit Druckluft vermischbar und an ein Druckluftreservoir (15) anschliessbar sind.

7. Selbstbedienungsabgabeeinrichtung nach Anspruch 1, dadurch gekennzeichnet, dass jedem Vorratsbehälter (11) eine Fördereinrichtung (10) zugeordnet ist, wobei die Fördereinrichtungen an einen gemeinsamen Motor (22) über eine Kupplung (21) anschliessbar sind.

8. Selbstbedienungsabgabeeinrichtung nach einem der Ansprüche 1 bis 7, dadurch gekennzeichnet, dass die Fördereinrichtung (10) an alle Vorratsbehälter (11) wahlweise umschaltbar ist.

9. Selbstbedienungsabgabeeinrichtung nach Anspruch 1, dadurch gekennzeichnet, dass ein vorbestimmter Förderdruck in den Vorratsbehältern (11) durch Zuführung von Druckluft aus einem Druckluftreservoir (15) einstellbar ist.

10. Selbstbedienungsabgabeeinrichtung nach einem der Ansprüche 1 und 9, dadurch gekennzeichnet, dass der jeweilige Förderdruck in den einzelnen Vorratsbehältern (11) durch Druckreduzierventile (23) einstellbar ist.

11. Selbstbedienungsabgabeeinrichtung nach einem der Ansprüche 1 bis 10, dadurch gekennzeichnet, dass die Spezialmittel in flüssigem, gas-, pulver- bzw. granulatförmigem Zustand oder als beliebige Mischung dieser Zustände vorliegen.

12. Selbstbedienungsabgabeeinrichtung nach einem der Ansprüche 1 bis 11, dadurch gekennzeichnet, dass die Spezialmittel in den Vorratsbehältern (11) mit einem Lösungsmittel bzw. einem Verdünner mittels einer Mischvorrichtung vermischbar sind.

13. Selbstbedienungsabgabeeinrichtung nach einem der Ansprüche 1 bis 11, dadurch gekennzeichnet, dass sich das Lösungsmittel bzw. der Verdünner in mindestens einem Behälter befindet und wahlweise mit einer Mischvorrichtung verbindbar ist.

## Claims

1. Self-service dispenser for dispensing preparations, the preparations being usable on motor vehicles, characterised in that the preparations are special preparations for maintenance, servicing, cleaning, care and/or upkeep, for example, tyre/rubber cleaner, wheel rim cleaner, windscreen - and glass cleaner, windscreen-washing water, control panel/dashboard cleaner, cushion and seat cleaner, silicone for door seals, distilled water, engine sealant, engine cleaner and deodorising spray for the car's interior, which essentially are required in small quantities or relatively infrequently, in comparison to the supply of cleaning preparation at car washes, and the preparations are dispensable via an individual spray gun for each preparation, the duration of usage or quantity dispensed being determinable and controllable by an electronic control.

2. Self-service dispenser according to claim 1, characterised in that any number of special preparations can be chosen in any combination, sequence or order.

3. Self-service dispenser according to claim 1, characterised in that, by means of a coin insertion and subsequent verification of the coin, the electronic control releases the operation of the self-service dispenser for car care to provide a special preparation in a certain quantity and/or for a certain time period using a special preparation, the type of the special preparation used and the individual costs of the special preparation used per unit of quantity determining the quantity and time duration.

4. Self-service dispenser according to one of claims 1 to 3, characterised in that the quantities of the individual special preparation used can be measured during their withdrawal by means of quantity measuring devices and that the remaining dispenser capacity is determinable by the electronic control.

5. Self-service dispenser according to claim 4, characterised in that all quantities of the individual special preparations can be measured individually by a switchable quantity measuring device.

6. Self-service dispenser according to claim 1, characterised in that mixer devices are provided, in which the special preparations can be mixed with compressed air, and the mixer devices are connected to a compressed air reservoir (15).

7. Self-service dispenser according to claim 1, characterised in that a propelling device (10) is assigned to each supply container (11), the propelling devices each being connectable to a common motor (22) via a coupling (21).

8. Self-service dispenser according to one of claims 1 to 7, characterised in that the propelling device (10) is optionally switchable between all supply containers (11).

9. Self-service dispenser according to claim 1, characterised in that a predetermined feed pressure can be introduced into the supply containers (11) by supplying compressed air from a compressed air reservoir (15).

10. Self-service dispenser according to one of claims 1 and 9, characterised in that the relevant feed pressure can be introduced into the individual supply containers (11) by means of pressure-reducing valves (23).

11. Self-service dispenser according to one of the claims 1 to 10, characterised in that the special preparations are in fluid, gas, powder or granulated form or any mixture of these states.

12. Self-service dispenser according to one of the claims 1 to 11, characterised in that the special preparations can be mixed in the supply containers (11) with a solvent or a thinner by means of a mixing device.

13. Self-service dispenser according to one of the claims 1 to 11, characterised in that the solvent or the thinner is located in at least one container and is optionally connectable to a mixing device.

## Revendications

1. Dispositif de distribution en libre service servant à fournir des moyens, les moyens pouvant être utilisés sur des véhicules automobiles, caractérisé en ce que les moyens sont des moyens spéciaux pour les soins, l'entretien, le nettoyage, l'alimentation et/ou le maintien en bon état, par exemple des produits de nettoyage pour pneumatiques/caoutchouc, des produits de nettoyage pour jantes, des produits de nettoyage pour vitres et glaces, de l'eau pour essuie-glace, des produits de nettoyage pour le tableau de bord de l'habitacle, des produits de nettoyage pour coussins et sièges, du silicone pour les caoutchoucs de porte, de l'eau distillée, des produits d'étanchéité pour moteur, des produits de nettoyage pour moteur et un aérosol désodorisant pour l'air de l'habitacle, lesquels produits sont, par rapport au débit des produits de nettoyage dans les installations de lavage automatique, nécessaires en petites quantités ou à intervalles de temps relativement longs, et les moyens pouvant être fournis chacun individuellement, chaque fois par l'intermédiaire d'un pistolet pulvérisateur, tandis qu'une commande électronique permet de déterminer et de commander la durée d'utilisation ou le dosage des moyens individuels.

2. Dispositif de distribution en libre service selon la revendication 1, caractérisé en ce que l'on peut choisir un nombre quelconque de moyens spéciaux, suivant n'importe quelle combinaison, ou bien n'importe quelle séquence et n'importe quel ordre chronologique.

3. Dispositif de distribution en libre service selon la revendication 1, caractérisé en ce que la commande électronique autorise, après l'introduction de pièces de monnaie et le contrôle des pièces, le fonctionnement du dispositif de distribution en libre service destiné à l'entretien automatique, pour une quantité déterminée et/ou pour une durée d'utilisation déterminée des moyens spéciaux, le type du moyen spécial utilisé et les coûts individuels du moyen spécial utilisé par unité de quantité déterminant la quantité et la durée d'utilisation.

4. Dispositif de distribution en libre service selon l'une des revendications 1 à 3, caractérisé en ce que les quantités des moyens spéciaux individuels consommés peuvent être mesurées, pendant leur soutirage, au moyen d'indicateurs de débit, et en ce que la quantité restant à fournir peut être détectée par la commande électronique.

5. Dispositif de distribution en libre service selon la revendication 4, caractérisé en ce que toutes les quantités des moyens spéciaux individuels peuvent être mesurées séparément à l'aide d'un indicateur commutable de débit.

6. Dispositif de distribution en libre service selon la revendication 1, caractérisé en ce qu'il est prévu des dispositifs mélangeurs, dans lesquels les moyens spéciaux peuvent être mélangés à de l'air comprimé, avec raccordement à un réservoir d'air comprimé (15).

7. Dispositif de distribution en libre service selon la revendication 1, caractérisé en ce qu'un dispositif d'acheminement (10) est associé à chaque réservoir d'alimentation (11), les dispositifs d'acheminement pouvant être reliés à un moteur (22) commun par l'intermédiaire d'un dispositif d'accouplement (21).

8. Dispositif de distribution en libre service selon l'une des revendications 1 à 7, caractérisé en ce que le dispositif d'acheminement (10) peut être commuté, au choix, sur tous les réservoirs d'alimentation (11).

9. Dispositif de distribution en libre service selon la revendication 1, caractérisé en ce que l'on peut régler une pression prédéterminée d'alimentation, dans les réservoirs d'alimentation (11), par une amenée d'air comprimé, provenant d'un réservoir d'air comprimé (15).

10. Dispositif de distribution en libre service selon l'une des revendications 1 et 9, caractérisé en ce que la pression correspondante d'alimentation peut être réglée, dans les réservoirs d'alimentation (11) individuels, au moyen de soupapes réductrices de pression (23).

11. Dispositif de distribution en libre service selon l'une des revendications 1 à 10, caractérisé en ce que les moyens spéciaux sont présents à l'état liquide, à l'état gazeux, sous forme de poudre ou bien sous forme de granulés, ou bien sous la forme d'un mélange quelconque de ces états.

12. Dispositif de distribution en libre service selon l'une des revendications 1 à 11, caractérisé en ce que les moyens spéciaux peuvent être mélangés, dans les réservoirs d'alimentation (11), à un solvant ou bien a un agent de dilution, au moyen d'un dispositif mélangeur.

13. Dispositif de distribution en libre service selon l'une des revendications 1 à 11, caractérisé en ce que le solvant ou bien l'agent de dilution est placé dans au moins un récipient, et en ce qu'il peut être relié, au choix, à un dispositif mélangeur.
